# EUROPEAN PATENT SPECIFICATION

(11) **EP 3 882 050 B1**
(45) Date of publication and mention of the grant of the patent: **22.02.2023**
(21) Application number: 20165484.5
(22) Date of filing: 25.03.2020
(51) Int. Cl.: B60C 9/00, B60C 9/20, B60C 9/22

(54) **A TIRE AND A RUBBER PLY FOR A TIRE**
REIFEN UND GUMMILAGE FÜR EINEN REIFEN
PNEUMATIQUE ET NAPPE DE CAOUTCHOUC POUR PNEUMATIQUE

(30) Priority: 17.03.2020 US 202062990682 P
(43) Date of publication of application: 22.09.2021
(73) Proprietor: The Goodyear Tire & Rubber Company, Akron, OH 44316 (US); Kordsa Teknik Tekstil A.S, 41310 Izmit / Kocaeli (TR)
(72) Inventor: BECK, Raphael, L-8558 Reichlange (LU); VAN ECK, Dirk Lothar Maria, D-63110 Rodgau (DE); DURAND, Olivier Marcel Eugene, F-03410 Domerat (FR); MONTET, Sébastien, L-9171 Michelau (LU); BARRETT, Gary Terence, Sutton Coldfield, West Midlands B73 5LZ (GB); ROSSIGNAUD, Eric, F-03310 Villebret (FR); FIDAN, Mehmet Saadettin, 41310 zmit/ Kocaeli (TR); ÖZCAN, Hazal, 41310 zmit/ Kocaeli (TR); GÜL, Neslihan, 41310 zmit/ Kocaeli (TR)
(74) Representative: Goodyear IP Law

(56) References cited:
- EP-A1- 2 890 571
- EP-A1- 3 027 425
- EP-A1- 3 350 363
- EP-A2- 2 261 059
- JP-A- H0 624 207
- US-A1- 2015 283 858

## Description

### Field of the invention

This invention relates to a rubber component, in particular a rubber ply, for a tire. Moreover, the present invention relates to tire comprising such a rubber ply, in particular a tire comprising an overlay ply strip.

### Background of the Invention

Tire performance has significantly improved over the last decades. One driver of improvements in tire performance has been a continuous development of textile cord constructions embedded in rubber material such as in belt plies and overlay plies, in particular in the high-performance tire segment. Recently also paired textile cord constructions have been suggested in which two adjacent cords form a pair of cords which may help to improve the weight efficiency of a respective rubber ply component. Despite recent developments in that field, significant room for further improvement still remains.

EP 2 890 571 A1 and US 2015 / 0283858 A1 each disclose a rubber ply, wherein the rubber ply comprises pairs of textile cords arranged in parallel in a plane.

JP H0624207 A1 discloses a motorcycle tire having a reinforcing layer with nylon fibers, which is arranged outside its belt layer.

### Summary of the Invention

A first object of the present invention may be to provide an advanced rubber component including textile cords.

Another object of the present invention may be to provide an advanced rubber ply, in particular carcass ply, comprising textile cords which has a superior stiffness perpendicular to the length of the cords.

Still another object of the present invention may be to provide an advanced rubber ply comprising textile cords which minimizes weight and/or provides a good compromise between the amount of rubber and textile cord material utilized.

Another object of the present invention may be to provide a tire comprising a ply with textile cords, wherein the tire has a higher lateral stiffness.

The present invention is defined by independent claim 1. Further preferred embodiments are defined by the dependent claims.

In a first aspect of the invention, a rubber ply for a motorcycle tire is provided, the rubber ply comprising pairs of textile cords arranged in parallel in a plane. Each cord of the pairs of textile cords is made of Nylon 6.6 and comprises two cord plies, wherein the distance between two adjacent pairs of textile cords (dₚ) is at least five times larger than the distance between two parallel textile cords (dᵢ) within a pair of the textile cords, and wherein the two cord plies in one or more of the textile cords are twisted together in a range from 8 twists per 2.54 cm (or twists per inch or TPI) to 12 twists per 2.54 cm (wherein 1 twist per inch corresponds to 39.37 twists per meter) and have each a (linear) density ranging from 500 dtex to 2000 dtex. The inventors have discovered that such a ply construction is particularly desirable.

In one embodiment, the distance between two adjacent pairs of textile cords (dp) corresponds to (or ranges from) 40% to 300% of a maximum diameter of the cords of said adjacent pairs of textile cords. In other words, the maximum diameter of a cord shall be the largest diameter measurable in a direction perpendicular to the extension of the cord, in particular in case the cord does not have a perfect circular cross section. Such a distance may help to ensure that sufficient rubber is present between the pairs of textile cords such that a sufficient level of tear resistance is provided.

In another embodiment, the distance between two parallel textile cords (di) within a pair of textile cords is smaller than 30%, preferably 10%, of a maximum diameter of the cords of said pair of textile cords. In another embodiment, the rubber ply comprises a plurality of pairs of textile cords arranged in parallel in a plane and coated, or in other words calendered, on both sides with rubber or rubber sheets so as to embed the plurality of cords within the rubber and/or form the rubber ply. In principle, it is known to the person skilled in the art how to make rubber plies including textile cords or fabrics comprising such cords, in particular in a textile or fabric calendar unit. Rather the specific arrangement of cords within the rubber ply, and the type of cords and/or its properties are within the focus of the present invention.

In another embodiment, the number of textile cords measured in parallel to the plane and perpendicular to a length of the textile cords ranges from 25 ends per 2.54 cm (or ends per inch (EPI)) to 40 ends per 2.54 cm. In particular, each pair of cords is considered to have two ends, i.e. one end per cord. A pair of cords may be considered to lie in parallel (or in other words flat) in said plane.

In yet another embodiment, the number of textile cords measured in parallel to the plane and perpendicular to a length of the cords ranges from 30 ends per 2.54 cm to 38 ends per 2.54 cm. These values have been found by the inventors to be most preferable.

In still another embodiment, two cord plies of the textile cords are twisted together in a range from 9 twists per 2.54 cm to 11 twists per 2.54 cm to form together one cord of a pair of cords. Such a twist factor has determined to be most desirable.

In still another embodiment, the density of the cord plies is ranging from 900 dtex to 1450 dtex. This sub-range represents the most preferable linear cord ply density.

In yet another embodiment, the distance between two adjacent pairs of textile cords (dₚ) ranges from 0.15 mm to 1.5 mm. In general, such a distance could also be called the "rivet" between two adjacent pairs of cords. This distance has been identified to constitute a good compromise between the lateral density of cords and the amount of rubber still present between the pairs of cords to ensure a sufficient tear strength between the rubber on top and below of the plurality of cords. Even more preferable, the distance between two adjacent pairs of textile cords (dₚ) ranges from 0.2 mm to 1.0 mm. If the distance between two adjacent pairs of textile cords is too small, not enough rubber may penetrate into the region between two pairs, thereby impairing the tear strength of the material. On the other hand, if the distance is too large the re-enforcement effect of the fibers decreases, in particular in parallel to the plane and perpendicular to the direction of extension of the cords.

In another preferred embodiment, the distance between two parallel textile cords (di) within a pair of textile cords is smaller than 0.15 mm. In particular, the distance could also be 0 mm, in other words, the cords within the pair could touch each other. Due to the round shape of the cords there maybe still some rubber material between the cords of a pair despite the cords touching each other.

In still another embodiment, the distance between two parallel textile cords (di) within a pair of textile cords is within the range of 0.05 mm and 0.15 mm. In particular, it may be desirable to provide still some rubber material between the two cords of a pair to reduce the risk of breaking points.

In still another embodiment, the rubber ply is a rubber ply strip having one or more of: a width (w) ranging from 0.5 cm to 2 cm and a thickness (t) ranging from 0.4 mm to 2 mm. Even more preferably, the rubber ply strip has one or more of: a width (w) ranging from 0.5 cm to 1.5 cm and a thickness (t) ranging from 0.5 mm to 1.5 mm. Such a strip (e.g. an overlay strip or in other words overlay ply strip) may be spirally wound on a radially outermost belt ply so as to cover said belt ply (and being arranged radially below a tread of a tire).

In still another embodiment, the weight ratio of rubber to textile cords ranges from 2.3 : 1 to 1.1 : 1 in the rubber ply. Even more preferably, the ratio of rubber to textile cords by weight ranges from 2 : 1 to 1.5 : 1. This has turned out to be a desirable ratio between rubber and textile cords resulting in a good compromise of performance, in particular lateral stiffness, and weight.

In still another embodiment each cord ply has a plurality of yarns and/or filaments.

In a second aspect of the invention, a motorcycle tire is provided having the rubber ply in accordance with one or more of the aforementioned embodiments.

In an embodiment the tire comprises two spaced apart bead portions, a tread portion, a pair of sidewalls extending (essentially radially) from axially outer edges of the tread portion to join the respective bead portion, a carcass (or carcass ply/portion), at least one belt ply covering the carcass, and an overlay ply strip spirally arranged in a (circumferential) plane between the tread and the at least one belt ply, wherein the cords are arranged essentially in parallel to the length of the strip.

In a preferred embodiment, the strip is arranged at an angle ranging from 0 degrees to 5 degrees with respect to the equatorial plane (EP) of the tire.

In still another embodiment, the tire comprises at least one belt ply comprising a textile cord reinforcement.

In general, the features of different aspects and embodiments of the invention as well as of the present description can be combined with one another.

### Brief Description of the Drawings

The structure, operation and advantages of the invention will become more apparent upon contemplation of the following description taken in conjunction with the accompanying drawings, wherein:
Figure 1 shows a schematic cross section of a motorcycle tire comprising a spirally wound overlay ply strip in accordance with an embodiment of the present invention;
Figure 2 shows a schematic cross section of a rubber ply strip in accordance with another embodiment of the present invention.

### Detailed Description of the Invention

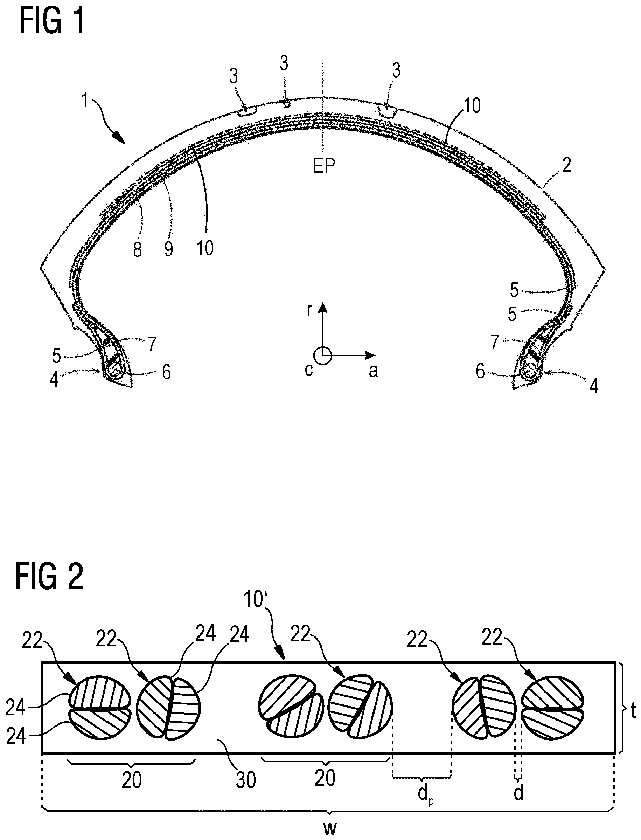

Figure 1 is a schematic cross-section of a motorcycle tire 1, in accordance a non-limiting embodiment of the invention. The example tire 1 has a tread or tread portion 2 having a plurality of grooves 3, a belt structure or portion comprising two belt plies 8, 9, a carcass ply 5, two sidewalls, and two bead regions or portions 4 comprising bead filler apexes 7 and beads 6. The carcass ply 5 includes a pair of axially opposite end portions, each of which is associated with a respective one of the beads 6. Each axial end portion of the carcass ply 5 may be turned up and around the respective bead 6 to a position to anchor each axial end portion. As further shown in Figure 1, the belt plies 8, 9 are covered by an overlay ply strip 10. In the present example, the overlay ply strip 10 is spirally wound around the belt ply 9 at an angle of less than 5° with respect to the equatorial plane of the tire EP. The overlay strip 10 comprises multiple parallel pairs of textile cords. While the drawing schematically indicates that the ply 10 does not overlap in the axial direction a, such an overlap may be present in practice and in another embodiment. For the sake of better comprehensibility, the axial direction a, the circumferential direction c and the radial direction r have been indicated in Figure 1 as commonly used in the description of tire geometries.

Figure 2 shows a detailed schematic cross section of another rubber ply strip 10' in accordance with another embodiment of the present invention. The example strip has three pairs 20 of cords 22, wherein each cord 22 is made of two cord plies 24. The cord plies 24 are twisted together to form a cord 22. The distance dₚ between two pairs 20 of cords 22 is considerably larger than the distance dᵢ between two cords 22 of one pair 20. In the present example, the distance dₚ is about 7 times larger than the distance dᵢ. The three pairs 20 of cords 22 are embedded over the width w of the strip 10' which has the thickness t. Due to the paired arrangement of the cords 22, it is possible to provide a relatively thin strip with a limited amount of rubber material.

In particular, each cord 22 comprises or consists of two cord plies 24 twisted together with 8 twists per 2.54 cm to 12 twists per 2.54 cm, wherein each yarn 24 has a linear density ranging from 500 dtex to 2000 dtex. Preferred examples could for instance have a linear density of 1400 dtex per cord ply 24 at 9.3 twists per 2.54 cm (i.e. a 1400/2 9.3 x 9.3 cord construction). The strip 10' could for instance have 31 ends per 2.54 cm, measured perpendicular to the length of the strip and assuming that the cords 22 are arranged essentially in parallel to the length of the strip 10' within the strip 10'. In another preferred example, a cord 22 could have the construction 940/2 10.8 x 10.8 twists per 2.54 cm, with 36 ends per 2.54 cm measured over the width w of the strip 10'. Each cord 22 of a pair 20 of cords 22 is counted separately when referring to ends per 2.54 cm values herein.

In general, rubber material can also be understood herein as an elastomeric material. Any rubber composition commonly used in tire plies or ply strips, in particular in overlay strips, can be used. In particular, the rubber ply can be a cured rubber ply, as common in tire technology.

While certain representative embodiments and details have been shown for the purpose of illustrating the subject invention, it will be apparent to those skilled in this art that various changes and modifications can be made therein without departing from the scope of the subject invention as defined in the appended claims.

## Claims

1. A rubber ply for a motorcycle tire (1), the rubber ply comprising pairs (20) of textile cords (22) arranged in parallel in a plane, wherein the distance (dₚ) between two adjacent pairs (20) of textile cords (22) is at least five times larger than the distance (dᵢ) between two parallel textile cords (22) within a pair (20) of textile cords (22),
**characterized in that** the textile cords (22) are made of Nylon 6.6 and each textile cord (22) of the pairs (20) of textile cords (22) comprises two cord plies (24), the two cord plies (24) in one or more of the textile cords (22) are twisted together in a range from 314.96 twists per meter (8 TPI) to 472.44 twists per meter (12 TPI) and wherein each of the cord plies (24) has a density ranging from 500 dtex to 2000 dtex.

2. The rubber ply of claim 1, wherein the distance (dp) between two adjacent pairs (20) of textile cords (22) corresponds to 40% to 300% of a maximum diameter of the cords of said adjacent pairs (20) of textile cords (22).

3. The rubber ply according to claim 1 or 2, wherein the distance (dᵢ) between two parallel textile cords (22) within a pair (20) of textile cords (22) is smaller than 30% of a maximum diameter of a cord (22) of said pair (20) of textile cords (22).

4. The rubber ply according to one or more of the preceding claims, wherein the number of textile cords (22) measured in parallel to the plane and perpendicular to a length of the textile cords (22) ranges from 984.25 ends per meter (25 EPI) to 1574.8 ends per meter (40 EPI), preferably from 1181.1 ends per meter (30 EPI) to 1496.06 ends per meter (38 EPI).

5. The rubber ply according to one or more of the preceding claims, wherein two cord plies (24) of the textile cords (22) are twisted together in a range from 354.33 twists per meter (9 TPI) to 433.07 twists per meter (11 TPI) to form together a cord (20).

6. The rubber ply according to one or more of the preceding claims, wherein the density is ranging from 900 dtex to 1450 dtex.

7. The rubber ply according to one or more of the preceding claims, wherein the distance (dₚ) between two adjacent pairs (20) of textile cords (22) ranges from 0.15 mm to 1.5 mm, preferably from 0.2 mm to 1.0 mm.

8. The rubber ply according to one or more of the preceding claims, wherein the distance (dᵢ) between two parallel textile cords (22) within a pair (20) of textile cords (22) is smaller than 0.15 mm.

9. The rubber ply according to one or more of the preceding claims, wherein the rubber ply is a rubber ply strip (10, 10') having one or more of: a width (w) ranging from 0.5 cm to 2 cm, preferably from 0.5 cm to 1.5 cm, and a thickness (t) ranging from 0.4 mm to 2 mm, preferably from 0.5 mm to 1.5 mm.

10. The rubber ply according to one or more of the preceding claims, wherein the rubber ply is an overlay ply strip (10, 10') and/or wherein each cord ply (24) has a plurality of filaments.

11. The rubber ply according to one or more of the preceding claims, wherein the ratio of rubber to textile cords (22) by weight ranges from 2.3 : 1 to 1.1 : 1, and preferably from 2.0 : 1 to 1.5 : 1.

12. A motorcycle tire comprising a rubber ply in accordance with one or more of the preceding claims.

13. The tire of claim 12, comprising two spaced apart bead portions (4), a tread portion (2), a pair of sidewalls extending from axially outer edges of the tread portion (2) to join the respective bead portions (4), a carcass ply (5), at least one belt ply (8, 9) covering the carcass ply (5), and an overlay ply strip (10, 10') spirally arranged in a circumferential plane between the tread portion (2) and the at least one belt ply (8, 9), wherein the overlay ply strip is a rubber ply according to claim 1 and the textile cords (22) are arranged essentially in parallel to the length of the strip (10, 10'), and wherein the strip (10, 10') is optionally arranged at an angle ranging from 0 degrees to 5 degrees with respect to the equatorial plane (EP) of the tire (1).

14. The tire according to claim 12 or 13, wherein the at least one belt ply (8, 9) comprises a textile cord reinforcement.

## Patentansprüche

1. Kautschuklage für einen Motorradreifen (1), die Kautschuklage umfassend Paare (20) von Textilkorden (22), die parallel in einer Ebene angeordnet sind, wobei der Abstand (distance - dₚ) zwischen zwei angrenzenden Paaren (20) von Textilkorden (22) mindestens fünfmal größer als der Abstand (dᵢ) zwischen zwei parallelen Textilkorden (22) innerhalb eines Paars (20) von Textilkorden (22) ist,
**dadurch gekennzeichnet, dass** die Textilkorde (22) aus Nylon 6.6 hergestellt sind und jeder Textilkord (22) der Paare (20) von Textilkorden (22) zwei Kordlagen (24) umfasst, wobei die zwei Kordlagen (24) in einem oder mehreren der Textilkorde (22) miteinander in einem Bereich von 314,96 Drehungen pro Meter (8 TPI) bis 472,44 Drehungen pro Meter (12 TPI) gedreht sind und wobei jede der Kordlagen (24) eine Dichte in dem Bereich von 500 dtex bis 2000 dtex aufweist.

2. Kautschuklage nach Anspruch 1, wobei der Abstand (dp) zwischen zwei angrenzenden Paaren (20) von Textilkorden (22) von 40 % bis 300 % eines maximalen Durchmessers der Korde der angrenzenden Paare (20) von Textilkorden (22) entspricht.

3. Kautschuklage nach Anspruch 1 oder 2, wobei der Abstand (dᵢ) zwischen zwei parallelen Textilkorden (22) innerhalb eines Paars (20) von Textilkorden (22) kleiner als 30 % eines maximalen Durchmessers eines Kords (22) des Paars (20) von Textilkorden (22) ist.

4. Kautschuklage nach einem oder mehreren der vorhergehenden Ansprüche, wobei die Anzahl von Textilkorden (22), gemessen parallel zu der Ebene und senkrecht zu einer Länge der Textilkorde (22), in dem Bereich von 984,25 Enden pro Meter (25 EPI) bis 1574,8 Enden pro Meter (40 EPI), bevorzugt von 1181,1 Enden pro Meter (30 EPI) bis 1496,06 Enden pro Meter (38 EPI) liegt.

5. Kautschuklage nach einem oder mehreren der vorhergehenden Ansprüche, wobei zwei Kordlagen (24) der Textilkorde (22) in einem Bereich von 354,33 Drehungen pro Meter (9 TPI) bis 433,07 Drehungen pro Meter (11 TPI) zusammengedreht sind, um zusammen einen Kord (20) auszubilden.

6. Kautschuklage nach einem oder mehreren der vorhergehenden Ansprüche, wobei die Dichte in dem Bereich von 900 dtex bis 1450 dtex liegt.

7. Kautschuklage nach einem oder mehreren der vorhergehenden Ansprüche, wobei der Abstand (dₚ) zwischen zwei angrenzenden Paaren (20) von Textilkorden (22) in dem Bereich von 0,15 mm bis 1,5 mm, bevorzugt von 0,2 mm bis 1,0 mm liegt.

8. Kautschuklage nach einem oder mehreren der vorhergehenden Ansprüche, wobei der Abstand (dᵢ) zwischen zwei parallelen Textilkorden (22) innerhalb eines Paars (20) von Textilkorden (22) kleiner als 0,15 mm ist.

9. Kautschuklage nach einem oder mehreren der vorhergehenden Ansprüche, wobei die Kautschuklage ein Kautschuklagenstreifen (10, 10') ist, der eines oder mehrere von Folgendem aufweist: eine Breite (width - w), die in dem Bereich von 0,5 cm bis 2 cm, bevorzugt von 0,5 cm bis 1,5 cm und eine Dicke (thickness - t), die in dem Bereich von 0,4 mm bis 2 mm, bevorzugt von 0,5 mm bis 1,5 mm liegt.

10. Kautschuklage nach einem oder mehreren der vorhergehenden Ansprüche, wobei die Kautschuklage ein Überdeckungslagenstreifen (10, 10') ist und/oder wobei jede Kordlage (24) eine Vielzahl von Filamenten aufweist.

11. Kautschuklage nach einem oder mehreren der vorhergehenden Ansprüche, wobei das Verhältnis von Kautschuk zu Textilkorden (22) nach Gewicht in dem Bereich von 2,3 : 1 bis 1,1 : 1 und bevorzugt von 2,0 : 1 bis 1,5 : 1 liegt.

12. Motorradreifen, umfassend eine Kautschuklage nach einem oder mehreren der vorhergehenden Ansprüche.

13. Reifen nach Anspruch 12, umfassend zwei beabstandete Wulstabschnitte (4), einen Laufflächenabschnitt (2), ein Paar Seitenwände, die sich von axialen Außenrändern des Laufflächenabschnitts (2) erstrecken, um die jeweiligen Wulstabschnitte (4) zu verbinden, eine Karkasslage (5), mindestens eine Gürtellage (8, 9), die die Karkasslage (5) bedeckt, und einen Überdeckungslagenstreifen (10, 10'), der in einer Umfangsebene zwischen dem Laufflächenabschnitt (2) und der mindestens einen Gürtellage (8, 9), spiralförmig angeordnet ist, wobei der Überdeckungslagenstreifen eine Kautschuklage nach Anspruch 1 ist, und die Textilkorde (22) im Wesentlichen parallel zu der Länge des Streifens (10, 10') angeordnet sind, und wobei der Streifen (10, 10') optional in einem Winkel in dem Bereich von 0 Grad bis 5 Grad hinsichtlich der Äquatorialebene (equatorial plane - EP) des Reifens (1) angeordnet ist.

14. Reifen nach Anspruch 12 oder 13, wobei die mindestens eine Gürtellage (8, 9) eine Textilkordverstärkung umfasst.

## Revendications

1. Pli en caoutchouc pour un bandage pneumatique (1) qui est destiné à une motocyclette, le pli en caoutchouc comprenant des paires (20) de câblés en textile (22) qui sont disposés en parallèle dans un plan ; dans lequel la distance (dₚ) entre deux paires adjacentes (20) de câblés en textile (22) est au moins cinq fois supérieure à la distance (di) qui s'étend entre deux câblés parallèles en textile (22) au sein d'une paire (20) de câblés en textile (22) ; **caractérisé en ce que** les câblés en textile (22) sont constitués de nylon 6.6 et chaque câblé en textile (22) des paires (20) de câblés en textile (22) comprend deux nappes de câblés (24), les deux nappes de câblés (24) dans un ou plusieurs câblés parmi les câblés en textile (22) étant torsadées l'une avec l'autre dans une plage allant de 314,96 torsions par mètre (8 TPI) à 472,44 torsions par mètre (12 TPI) ; et dans lequel chacune des nappes de câblés (24) possède une densité qui se situe dans une plage allant de 500 dtex à 2.000 dtex.

2. Pli en caoutchouc selon la revendication 1, dans lequel la distance (dₚ) qui s'étend entre deux paires adjacentes (20) de câblés en textile (22) représente de 40 % à 300 % d'un diamètre maximal des câblés desdites paires adjacentes (20) de câblés en textile (22).

3. Pli en caoutchouc selon la revendication 1 ou 2, dans lequel la distance (dᵢ) qui s'étend entre deux câblés parallèles en textile (22) au sein d'une paire (20) de câblés en textile (22) représente moins de 30 % d'un diamètre maximal d'un câblé (22) de ladite paire (20) de câblés en textile (22).

4. Pli en caoutchouc selon une ou plusieurs des revendications précédentes, dans lequel le nombre de câblés en textile (22), que l'on mesure parallèlement au plan et perpendiculairement à une longueur des câblés en textile (22), se situe dans une plage allant de 984,25 bouts par mètre (25 EPI) à 1.574,8 bouts par mètre (40 EPI), de préférence de 1.181,1 bouts par mètre (30 EPI) à 1.496,06 bouts par mètre (38 EPI).

5. Pli en caoutchouc selon une ou plusieurs des revendications précédentes, dans lequel deux nappes de câblés (24) des câblés en textile (22) sont torsadées l'une avec l'autre dans une plage allant de 354,33 torsions par mètre (9 TPI) à 433,07 torsions par mètre (11 TPI) afin de former ensemble un câblé (20).

6. Pli en caoutchouc selon une ou plusieurs des revendications précédentes, dans lequel la densité se situe dans une plage allant de 900 dtex à 1.450 dtex.

7. Pli en caoutchouc selon une ou plusieurs des revendications précédentes, dans lequel la distance (dₚ) qui s'étend entre deux paires adjacentes (20) de câblés en textile (22), se situe dans une plage allant de 0,15 mm à 1,5 mm, de préférence de 0,2 mm à 1,0 mm.

8. Pli en caoutchouc selon une ou plusieurs des revendications précédentes, dans lequel la distance (di) qui s'étend entre deux câblés parallèles en textile (22) au sein d'une paire (20) de câblés en textile (22) est inférieure à 0,15 mm.

9. Pli en caoutchouc selon une ou plusieurs des revendications précédentes, dans lequel le pli en caoutchouc représente une bande (10, 10') sous la forme d'un pli en caoutchouc qui possède une ou plusieurs caractéristiques choisies parmi : une largeur (w) qui se situe dans une plage allant de 0,5 cm à 2 cm, de préférence de 0,5 cm à 1,5 cm, et une épaisseur (t) qui se situe dans une plage allant de 0,4 mm à 2 mm, de préférence de 0,5 mm à 1,5 mm.

10. Pli en caoutchouc selon une ou plusieurs des revendications précédentes, dans lequel le pli en caoutchouc représente une bande (10, 10') sous la forme d'une nappe de recouvrement et/ou dans lequel chaque nappe de câblés (24) possède un certain nombre de filaments.

11. Pli en caoutchouc selon une ou plusieurs des revendications précédentes, dans lequel le rapport entre le caoutchouc et les câblés en textile (22) en poids se situe dans une plage allant de 2,3 : 1 à 1,1 : 1, et de préférence de 2,0 : 1 à 1,5 : 1.

12. Bandage pneumatique destiné à une motocyclette qui comprend un pli en caoutchouc en conformité avec une ou plusieurs des revendications précédentes.

13. Bandage pneumatique selon la revendication 12, qui comprend deux portions (4) espacées l'une de l'autre, faisant office de talons, une portion (2) faisant office de bande de roulement, une paire de flancs qui s'étendent à partir des bords externes, dans la direction axiale, de la portion (2) faisant office de bande de roulement dans le but de joindre les portions respectives (4) faisant office de talons, une nappe de carcasse (5), au moins une nappe de ceinture (8, 9) qui recouvre la nappe de carcasse (5), et une bande (10, 10') sous la forme d'une nappe de recouvrement qui est disposée en spirale dans un plan circonférentiel qui s'étend entre la portion (2) faisant office de bande de roulement et ladite au moins une nappe de ceinture (8, 9) ; dans lequel la bande sous la forme d'une nappe de recouvrement représente un pli en caoutchouc selon la revendication 1, et les câblés en textile (22) sont disposés essentiellement en parallèle par rapport à la longueur de la bande (10, 10') ; et dans lequel la bande (10, 10') est disposée, de manière facultative, en formant un angle qui se situe dans une plage allant de 0 degré à 5 degrés par rapport au plan équatorial (EP) du bandage pneumatique (1).

14. Bandage pneumatique selon la revendication 12 ou 13, dans lequel ladite au moins une nappe de ceinture (8, 9) comprend un renforcement sous la forme d'un câblé en textile.
